# EUROPÄISCHE PATENTSCHRIFT

(11) **EP 0 585 934 B1**
(45) Veröffentlichungstag und Bekanntmachung des Hinweises auf die Patenterteilung: **22.04.1998**
(21) Anmeldenummer: 93114100.6
(22) Anmeldetag: 02.09.1993
(51) Int. Cl.: C10M 171/00, C10M 169/04, C09K 5/04, C10N 40/30, C10M 107/34, C10M 133/12

(54) **Verfahren zum Betrieb einer Verdichter-Wärmepumpe oder Kälteanlage mit Ammoniak als Kältemittel**
Method to run a compressor-heatpump or refrigerationplant with ammonia as refrigerant
Procédé de fonctionnement d'une pompe à chaleur ou d'une installation frigorifique à compresseur avec de l'ammoniac comme refrigérant

(30) Priorität: 03.09.1992 DE 4229364; 03.12.1992 DE 4240733
(43) Veröffentlichungstag der Anmeldung: 09.03.1994
(73) Patentinhaber: Linde Aktiengesellschaft, 65189 Wiesbaden (DE); Rhein Chemie Rheinau GmbH, 68219 Mannheim (DE)
(72) Erfinder: Mall, Klaus, D-50389 Wesseling (DE); Kussi, Siegfried, D-42929 Wermelskirchen (DE)
(74) Vertreter: Kasseckert, Rainer

(56) Entgegenhaltungen:
- EP-A- 0 227 477
- EP-A- 0 336 171
- EP-A- 0 490 810
- EP-A- 0 533 165
- DE-A- 2 806 133
- DATABASE WPI Week 8652, Derwent Publications Ltd., London, GB; AN 86-342476 & JP-A-61 255 977 (ASAHI GLASS)

## Beschreibung

Die Erfindung betrifft ein Verfahren zum Betrieb einer Verdichter-Wärmepumpe oder -Kälteanlage mit Ammoniak als Kältemittel und mit einem Kältemittelverdichter, der mit einem Schmiermittel aus der Gruppe der Polyalkylenglykole geschmiert ist.

Kälteanlagen mit Ammoniak als Kältemittel stellen in der Regel geschlossene Kältemittelkreisläufe dar. Der Kältemittelkreislauf besteht aus einem Kältemittelverdichter, wobei entweder volumetrisch fördernde Verdichter oder Zentrifugalkompressoren zum Einsatz kommen, aus einem Verflüssiger und einem Verdampfer. Das dampfförmige Kältemittel wird über den Kältemittelverdichter aus dem Verdampfer angesaugt, komprimiert und an den Verflüssiger weitergegeben, von wo aus es wiederum über ein Entspannungsventil in den Verdampfer gelangt. Gegenwärtig werden vor allem Mineralöle und synthetische Öle auf der Basis von Kohlenwasserstoffen als Schmiermittel verwendet. Diese sind jedoch in NH₃ praktisch nicht löslich und weisen bei tiefen Temperaturen große Zähigkeiten auf. Zum Ausschleusen dieser Öle aus dem Kältemittelkreislauf muß der Verfahrensablauf unterbrochen werden. Diese Unterbrechung ist jedoch unumgänglich, da mit dem Ammoniakstrom zwangsläufig das Öl aus dem Kältemittelverdichter in den Kältemittelkreislauf gelangt. Dabei setzt sich das Öl als Film an den Oberflächen ab, verschlechtert so den Wärmeübergang in den Wärmetauschern, wirkt sich in Ventilen und Regelorganen störend aus und setzt sich letztendlich als Sumpf im Verdampfer ab.

Aus der EP-A 0 490 810 ist ein Verfahren zum Betreiben einer NH₃-Kälteanlage oder -Wärmepumpe mit einem Verflüssiger, mit einer Expansionseinrichtung, mit einem Verdampfer und mit einem Kältemittelverdichter, der NH₃ fördert und komprimiert, bekannt. Dabei wird dem Kältemittelverdichter mit einer Schmiereinrichtung als Schmiermittel ein flüssiger Stoff aus der Gruppe der Polyalkylenglykole zugeführt. Die im Kältemittelverdichter dem Förderstrom des Kältemittels beigemischten Schmiermittelanteile laufen mit dem Förderstrom mit. Verdampferflüssigkeit wird in einem Teilstrom abgezweigt, wobei Schmiermittel über einen Schmiermittelaustreiber und einen Abscheider flüssig konzentriert und der Schmiereinrichtung zugeführt, während der verdampfte Anteil des Teilstroms in den Hauptförderstrom zurückgeführt wird.

Die verwendeten Polyalkylenglykole bestehen im Falle der EP-A 0 490 810 vorzugsweise aus Ethylen- und Propylen-Copolymeren, wobei diese in einem Ethylen-Propylen-Verhältnis von 4 : 1 vorhanden sind.

Nun treten aber an den Druckventilen von Kolbenverdichtern in der Regel so hohe Temperaturen auf, ca. 180°C, daß die stark reaktionsfähigen Polyalkylenglykole diesen hohen Temperaturen unter Umständen nicht mehr standhalten können.

Aus der EP-A 0 336 171 ist eine Schmiermittelölzusammensetzung für Kühlgeräte, inbesondere für Kühlschränke oder Auto-Klimaanlagen, bekannt. Als Kältemittel für derartige Kühlgeräte wird hierbei HFC 134a verwendet. Das zugesetzte Schmiermittel weist als Basisöl einen Polyoxyalkylenglykolmonoether auf. Um die Leistung dieses Öles zu verbessern, wird vorgeschlagen, dem Öl verschiedene Antioxidantien zuzusetzen.

Aufgabe der vorliegenden Erfindung ist es, ein Verfahren zum Betreiben einer Verdichter-Wärmepumpe oder Kälteanlage mit Ammoniak als Kältemittel bereitzustellen, bei dem ein Schmiermittel für einen geschmierten Kältemittelverdichter zum Einsatz kommt, das den hohen Temperaturen am Druckventil des Kolbenverdichters standhält.

Dies wird erfindungsgemäß dadurch erreicht, daß als Schmiermittel copolymere Alkylenglykole oder Gemische aus Polyalkylenglykolen mit jeweils einem Ethylenoxid-Propylenoxid-Verhältnis von 2 : 1 bis 1 : 2 angewendet werden und dem Schmiermittel eine Amin oder Aminderivat zugesetzt wird, wobei das Amin bzw. Aminderivat in einer Menge von 0,1 bis 5, vorzugsweise 1 Massen-%, bezogen auf das Schmiermittel, zugesetzt wird.

Durch die Zugabe eines Amins zu dem aus copolymeren Alkylenglykolen oder Gemischen aus Polyalkylenglykolen bestehenden Schmiermittel kann ein Aufbrechen der Polyalkylenglykole und copolymeren Alkylenglykole unter Depolymerisationserscheinungen verhindert werden. Die zugegebenen Amine fungieren hierbei als Radikalfänger.

Ferner wird durch die Zugabe eines Amins ein Zersetzen des Schmiermittels bei den am Druckventil von ölgeschmierten NH₃-Verdichtern auftretenden hohen Endtemperaturen wirkungsvoll verhindert.

Selbstverständlich muß gewährleistet sein, daß das zugegebene Amin in der Polyalkylenglykol-NH₃-Mischung über den gesamten innerhalb der NH₃-Kälteanlage bzw. -Wärmepumpe herrschenden Temperaturbereich löslich bleibt. Es darf also zu keinerlei Salzbildungen oder anderen unerwünschten chemischen Reaktionen, wie z. B. Ausflockungen etc., kommen. Derartige negative Effekte müssen deshalb vermieden werden, da sie zu Betriebsstörungen und Schäden, wie z. B. Verstopfungen von Regelorganen, führen würden.

Für die erfindungsgemäßen Zwecke eignen sich sowohl Polyethylenglykole als auch Polypropylenglykole sowie Mischungen derselben und deren Copolymere des Molmassenbereichs 200-4500. Polyethylenglykole haben zwar höhere Pour-Points (Stockpunkte) als Polypropylenglykole, sind jedoch in Ammoniak sehr gut löslich, so daß sich keine Ausscheidungen im Kältemittelkreislauf zeigen. Die Polypropylenglykole haben indessen niedrige Pour-Points im Bereich von -40 bis -50°C. Diese günstige Eigenschaft bleibt auch bei Mischungen und Mischpolymerisaten mit Polyethylenglykolen bis zum Verhältnis von etwa 1 : 1 erhalten. Letztendlich liefern je nach Anforderungen Gemische und Mischpolymerisate von Polyethylenglykolen und Polypropylenglykolen im Verhältnis 2 : 1 bis 1 : 2 optimale Kompromisse hinsichtlich Pour-Point und Löslichkeit in Ammoniak.

Weitere Variationsmöglichkeiten für das erfindungsgemäße Schmiermittel ergeben sich aus den vorstehend geschilderten Einflüssen der Funktionalität. Je geringer die Anzahl der funktionsfähigen Hydroxyl-Gruppen im Molekül, desto größer ist seine thermische Stabilität. Umgekehrt steigt die Löslichkeit eines Polyalkylenglykols mit größer werdender Zahl der Hydroxyl-Gruppen.

Insgesamt hat es sich als zweckmäßig erwiesen, Polypropylenglykole vorzugsweise in ihrer difunktionellen Form, gegebenenfalls im Gemisch mit mono- oder difunktionellen Polyethylenglykolen, einzusetzen.

Unabhängig davon, ob als Schmiermittel copolymere Alkylenglykole oder Gemische aus Polyalkylenglykolen verwendet werden, wird erfindungsgemäß als Amin ein Diphenylamin, ein Diphenylaminderivat, ein Phenylendiamin oder ein Phenylendiaminderivat zugesetzt.

Der erfindungsgemäße Aminzusatz bewirkt eine Steigerung der Löslichkeit auch etwas schwerer löslicher Polyalkylenglykole, so daß es die Erfindung ermöglicht, auch diese wegen ihres im allgemeinen niedrigen Stockpunktes günstigen Polyalkylenglykole für die Schmierung von Kältemittelverdichtern in NH₃-Kältemittelanlagen einzusetzen.

In Vergleichstests von Polyalkylenglykolen mit und ohne Zusatz von Diphenylamin, Diphenylaminderivaten, Phenylendiamin oder Phenylendiaminderivaten konnte ermittelt werden, daß die Polyalkylenglykole mit den erfindungsgemäßen Zusätzen eine erhöhte thermische Resistenz und daraus resultierend eine höhere Lebensdauer aufweisen.

Erfindungsgemäß wird dem Schmiermittel vorzugsweise ein disubstituiertes Diphenylamin zugesetzt. Als besonders wirksam hat sich 4,4'-Di(2-phenylethyl)diphenylamin erwiesen. Alternativ dazu kann dem Schmiermittel N,N'-disubstituiertes Phenylendiamin zugesetzt werden. In diesem Falle hat sich N,N'-Di-sek.butyl-p-phenylendiamin als besonders wirksam erwiesen.

Das Diphenylamin, Diphenylaminderivat, Phenylendiamin oder Phenylendiaminderivat wird dem Schmiermittel in einer Menge von 0,1 bis 5, vorzugsweise 1 Massen-%, bezogen auf das Schmiermittel, zugesetzt.

Bei der Wahl von difunktionellen Polypropylenglykolen als Schmiermittel erweist es sich als besonderer Vorteil, daß diese Verbindungen eine gewisse Löslichkeit für Mineralöle und synthetische Kohlenwasserstofföle aufweisen. Dieser Vorteil macht sich insbesondere dann bemerkbar, wenn zuvor mit Mineralölen oder synthetischen Kohlenwasserstoffölen geschmierte Kälteanlagen auf Polyalkylenglykole als Schmiermittel umgestellt werden. Selbstverständlich könnte eine Kälteanlage mit Hilfe geeigneter Lösungsmittel vollständig ölfrei gespült werden, so daß die Löslichkeit von Mineralölen oder synthetischen Kohlenwasserstoffölen in dem sodann eingesetzten Schmiermittel keine Rolle spielen würde. Erfahrungsgemäß ist dieses Verfahren jedoch außerordentlich aufwendig und die Beseitigung des eingesetzten Lösungsmittels teuer. Bei der Verwendung von Benzin oder Toluol als Lösungsmittel kommt wegen deren leichter Entflammbarkeit noch die Gefahr von Bränden hinzu. In diesen Fällen ermöglicht der Einsatz difunktioneller Polypropylenglykole auch bei Vorhandensein von Resten von Mineralölen oder synthetischen Kohlenwasserstoffölen innerhalb des Kältemittelkreislaufs von Anfang an einen problemlosen Betrieb.

Für die Eignung als erfindungsgemäß einzusetzendes Schmiermittel muß dieses bestimmte physikalische Eigenschaften erfüllen. Das Schmiermittel soll eine relative molare Masse zwischen 200 und 4500, eine kinematische Viskosität bei 40°C zwischen 20 und 450 mm²/s und einen Pour-point zwischen -35 und -50°C besitzen.

Als Beispiele hierfür seien die Daten zweier Polyalkylenglykole unterschiedlichen Polymerisationsgrades mit einem Ethylenoxid-Propylenoxid-Verhältnis von 1 : 1 (PAG-EP 1:1) und einem Aminderivatzusatz von 1 Massen-% aufgeführt.

| | PAG-EP 1:1 | |
|---|---|---|
| | (1) | (2) |
| Molmasse | ca. 1200 | ca. 2500 |
| Viskosität (mm²/s) bei 40°C | ca. 70 | ca.220 |
| Pour-Point | -50°C | -45°C |
| Dichte (g/cm³) bei 20°C | 1,038 | 1,046 |
| PAG-EP 1:1 (1) ist besonders für Kolbenverdichter und PAG-EP 1:1 (2) für Schraubenverdichter, die ein Schmieröl mit einer Viskositätsklasse zwischen ISO VG 100 und ISO VG 460 benötigen, geeignet. | | |

## Patentansprüche

1. Verfahren zum Betrieb einer Verdichter-Wärmepumpe oder -Kälteanlage mit Ammoniak als Kältemittel und mit einem Kältemittelverdichter, der mit einem Schmiermittel aus der Gruppe der Polyalkylenglykole geschmiert ist, **dadurch gekennzeichnet,** daß als Schmiermittel copolymere Alkylenglykole oder Gemische aus Polyalkylenglykolen mit jeweils einem Ethylenoxid-Propylenoxid-Verhältnis von 2 : 1 bis 1 : 2 angewendet werden und dem Schmiermittel ein Amin oder Aminderivat zugesetzt wird, wobei das Amin bzw. Aminderivat in einer Menge von 0,1 bis 5, vorzugsweise 1 Massen-%, bezogen auf das Schmiermittel, zugesetzt wird.

2. Verfahren nach Anspruch 1, dadurch gekennzeichnet, daß das Ethylenoxid-Propylenoxid-Verhältnis etwa 1:1 1 beträgt.

3. Verfahren nach Anspruch 1 oder 2, dadurch gekennzeichnet, daß als Amin ein Diphenylamin zugesetzt wird.

4. Verfahren nach Anspruch 1 oder 2, dadurch gekennzeichnet, daß als Amin ein Diphenylaminderivat zugesetzt wird.

5. Verfahren nach Anspruch 4, dadurch gekennzeichnet, daß ein disubstituiertes Diphenylamin zugesetzt wird.

6. Verfahren nach Anspruch 5, dadurch gekennzeichnet, daß 4,4'-Di(2-phenylethyl)diphenylamin zugesetzt wird.

7. Verfahren nach Anspruch 1 oder 2, dadurch gekennzeichnet, daß als Amin ein Phenylendiamin zugesetzt wird.

8. Verfahren nach Anspruch 1 oder 2, dadurch gekennzeichnet, daß als Amin ein Phenylendiaminderivat zugesetzt wird.

9. Verfahren nach Anspruch 8, dadurch gekennzeichnet, daß ein N,N'-disubstituiertes Phenylendiamin zugesetzt wird.

10. Verfahren nach Anspruch 9, dadurch gekennzeichnet, daß N,N'-Di-sek.-butyl-p-phenylendiamin zugesetzt wird.

## Claims

1. Process for operating a compressor-heatpump or compressor-refrigeration unit having ammonia as refrigerant and having a refrigerant compressor which is lubricated by a lubricant selected from the group consisting of the polyalkylene glycols, characterized in that, as lubricant, use is made of copolymeric alkylene glycols or mixtures of polyalkylene glycols having in each case an ethylene oxide:propylene oxide ratio of 2:1 to 1:2 and an amine or amine derivative is added to the lubricant, the amine or amine derivative being added in an amount of 0.1 to 5, preferably 1, % by mass, based on the lubricant.

2. Process according to Claim 1, characterized in that the ethylene oxide:propylene oxide ratio is about 1:1.

3. Process according to Claim 1 or 2, characterized in that, as amine, a diphenylamine is added.

4. Process according to Claim 1 or 2, characterized in that, as amine, a diphenylamine derivative is added.

5. Process according to Claim 4, characterized in that a disubstituted diphenylamine is added.

6. Process according to Claim 5, characterized in that 4,4'-bis(2-phenylethyl)diphenylamine is added.

7. Process according to Claim 1 or 2, characterized in that, as amine, a phenylenediamine is added.

8. Process according to Claim 1 or 2, characterized in that, as amine, a phenylenediamine derivative is added.

9. Process according to Claim 8, characterized in that an N,N'-disubstituted phenylenediamine is added.

10. Process according to Claim 9, characterized in that N,N'-di-sec-butyl-p-phenylenediamine is added.

## Revendications

1. Procédé d'exploitation d'une pompe à chaleur ou d'une installation frigorifique à compresseur avec de l'ammoniac comme réfrigérant et un compresseur du réfrigérant, qui est graissé au moyen d'un lubrifiant du groupe des polyalkylèneglycols, caractérisé en ce que comme lubrifiant on utilise des alkylèneglycols copolymères ou des mélanges de polyalkylèneglycols, présentant chacun un rapport de 2:1 à 1:2 de l'oxyde d'éthylène à l'oxyde de propylène, et en ce qu'une amine ou un dérivé d'amine est ajouté au lubrifiant, ladite amine ou ledit dérivé d'amine étant ajouté dans une quantité allant de 0,1 à 5% en masse, et de préférence de 1%, par rapport au lubrifiant.

2. Procédé suivant la revendication 1, caractérisé en ce que le rapport de l'oxyde d'éthylène à l'oxyde de propylène est d'environ 1:1.

3. Procédé suivant la revendication 1 ou 2, caractérisé en ce que l'amine ajoutée est une diphénylamine.

4. Procédé suivant la revendication 1 ou 2, caractérisé en ce que l'amine ajoutée est un dérivé de diphénylamine.

5. Procédé suivant la revendication 4, caractérisé en ce qu'une diphénylamine disubstituée est ajoutée.

6. Procédé suivant la revendication 5, caractérisé en ce que la 4,4'-di (2-phényléthyl) diphénylamine est ajoutée.

7. Procédé suivant la revendication 1 ou 2, caractérisé en ce que l'amine ajoutée est une phénylènediamine.

8. Procédé suivant la revendication 1 ou 2, caractérisé en ce que l'amine ajoutée est un dérivé de phénylènediamine.

9. Procédé suivant la revendication 8, caractérisé en ce qu'une phénylènediamine N,N' disubstituée est ajoutée.

10. Procédé suivant la revendication 9, caractérisé en ce que la N,N'-di-sec.-butyl-p-phénylènediamine est ajoutée.
